Europäisches Patentamt

European Patent Office

Office européen des brevets

(19)

(11) **EP 1 722 317 A1**

(12) **EUROPEAN PATENT APPLICATION**

(43) Date of publication:
**15.11.2006 Bulletin 2006/46**

(51) Int Cl.:
***G06Q 10/00*** *(2006.01)*

(21) Application number: **05010270.6**

(22) Date of filing: **11.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (74) Representative: **Winter, Brandl, Fürniss, Hübner Röss, Kaiser,**<br>**Polte Partnerschaft Patent- und Rechtsanwaltskanzlei**<br>**Alois-Steinecker-Strasse 22**<br>**85354 Freising (DE)** |
| (71) Applicant: **Lu, Li-Chih**<br>**Pan-Chiao, Taipei (TW)** | <u>Remarks:</u><br>Amended claims in accordance with Rule 86 (2) EPC. |
| (72) Inventor: **Lu, Li-Chih**<br>**Pan-Chiao, Taipei (TW)** | |

(54) **Automatic inventory management system**

(57)     An automatic inventory management system comprises an inventory management database to store inventory information useful in the inventory management and to include description, lead time, daily consumption quantity etc. of a plurality of resources; a maximum stock factor setting module to allow user to set a maximum stock factor; a purchase quantity control module to calculate and output a suggested purchase quantity for particular resources based on factors as set in said maximum stock factor setting module and data contained in said inventory management database; and an alert module to generate an alert when the quantity of inventory of a particular resource approaches to a predetermined value, to suggest the user to purchase the particular resource. A user needs only to set the maximum stock factor and the invented system automatically calculates quantity of resource for which a purchase order should be made and the inventory management is conducted automatically.

Fig. 1

**Description**

FIELD OF THE INVENTION

The present invention relates to an automatic inventory management system, especially to an automatic inventory management system executed upon setting by user target value of management.

BACKGROUND OF THE INVENTION

In the contemporary enterprises, using the computer system to mange internal operations of an enterprise has become a trend. The inventory management is one of the important parts of the enterprise internal management. Many inventory management systems using the computer system have been developed.

The term "inventory management" as used here should include at least tow aspects. The first one is the management of inventory of merchandise or products and the other is the management of material and components in storage. For a trading company, the term "inventory management" should denote to management of merchandise. For a manufacturer, it should denote to management of products, material and components. For some service providers, inventory management denotes to management of recourses such as persons in service and time available for providing services. In this patent specification, they will be referred to as "resource" separately and "resources" collectively.

For most inventory management systems currently available in the industry, the major purpose is to generate information useful to staffs that are in charge of the inventory management. Such information is useful to these staffs because in the middle to large size enterprises, it is merely impossible to conduct effective management of inventory of products, material and components without the inventory management information, taking into consideration the large quantity and the wide variation of products, material and components being stored in the warehouse. However, the information as generated by the commercially available inventory management system is nothing but information for reference; the conventional inventory management system typically does not make a decision automatically based on the generated information. Most decisions related to inventory management are made by human being manually, taking the generated information into consideration. These inventory management systems may be called inventory management information generating system.

Still, there are some inventory management systems that are capable of making decisions automatically based on information generated and related to inventory management issues. These systems are able to generate alert signals, when the shortage of a product, a component or material in the warehouse is sensed or calculated. Some systems generate a suggested purchase quantity along with the alert, so that persons in charge of the inventory management can determine whether or not and how a purchase order for the product, component or material in shortage should be suggested or made. In such a system, quantity of resource to be supplemented is determined by staffs in charge of the management matters.

Nevertheless, in the conventional inventory management system, calculations and determinations on inventory management related factors are conducted in a mechanical or merely logical manner that determinations or suggestions generated by these systems seldom comply with the practice of the real world. To use the conventional inventory management system the enterprise is asked to take necessary safety policies, such as setting a safety stock. Costs and expenses in the management of inventory are thus increased.

In the conventional inventory management system, two concepts are essential in designing the system. They are the "safety stock" and the "time to purchase".

"Safety stock": "Safety stock" denotes to a minimum quantity of inventory that should be kept in store. In most cases, this quantity is equal to quantity of a resource that would be consumed or used during the term from when a purchase order is placed to supplier to when the ordered resource is received. The safety stock allows the enterprise to continue supplying its products to customers without being interrupted. Sometimes, the term safety stock denotes to quantity of a resource that needs to be stored in warehouse in order to satisfy an instantaneous increase of demand. No matter what the term safety stock means, how to determine the quantity of such stock is an open question. In general practice, quantity of the safety stock is decided by persons in charge of the inventory management according to their experience.

"Time to purchase": "Time to purchase" means the time point, always a date, at which the inventory management system should generate an alert to remind the user to purchase a particular resource, in order to maintain the safety stock. In the inventory management system, "time to purchase" relates to a quantity of inventory. When the quantity of a particular resource in store reaches (approaches to) the quantity, the inventory management system generates an alert to remind the user to take necessary actions. Formula to calculate the "time to purchase" in the conventional art is as follows:

$$\text{Time to purchase} = \text{safety stock} + \text{lead time} * \text{daily consumption} \text{ ------- (1)}$$

Wherein "lead time" denotes to number of days counting from the date on which a purchase order is made to a supplier to the date when the purchased resource is delivered, or from the date on which an order to produce a resource is made to the date when production of the same product is completed, "daily consumption" denotes to quantity of a resource that is used or consumed daily. The "daily consumption" may be the average daily consumption quantity of a resource in the past 30 days or for the past one year.

In the above formula, "safety stock" is a value dependent on the judgment of a person. In addition, "lead time" is the most important factor to determine the time to purchase. If value of "lead time" is determined too small, the result could lead to interruption of supply of the related product or merchandize. In order to avoid interruption of supply, managers of inventory would increase the quantity of "safety stock" or set the "lead time" longer than necessary, which results at unnecessarily excessive stock of inventory. Costs in the operation of an enterprise are thus increased. Nevertheless, quantity of the "daily consumption" in most companies is hypothetic and has no factual bases.

In addition to the above, although the congenital inventory management system is able to generate an alert when quantity of stock of a particular resource approaches to the "time to purchase", the value of quantity representing the "time to purchase" is calculated mechanically and does not always meet the actual situation. In the conventional art, the factor "time to purchase" is provided to avoid interruption of product supply. The value of "time to purchase" may be divided by "daily consumption" to produce a value to represent number of days before supply of the corresponding resource is interrupted. This value, however, is a result of calculation from the existing values. It is not a target of the inventory management, as should be in the mind of most managers.

OBJECTIVES OF THE INVENTION

The objective of this invention is to provide an automatic inventory management system to automatically detect inventory information to generate suggestions relating to inventory management.

Another objective of this invention is to provide an automatic inventory management system to manage inventory based on target information set by the user.

Another objective of this invention is to provide an automatic inventory management system to generate suggestions that comply with the actual situation of an enterprise.

SUMMARY OF THE INVENTION

According to this invention, the automatic inventory management system comprises an inventory management database to store inventory information useful in the inventory management and to include description, lead time, daily consumption quantity etc. of a plurality of resources; a maximum stock factor setting module to allow user to set a maximum stock factor; a purchase quantity control module to calculate and output a suggested purchase quantity for particular resources based on factors as set in said maximum stock factor setting module and data contained in said inventory management database; and an alert module to generate an alert when the quantity of inventory of a particular resource approaches to a predetermined value, to suggest the user to purchase the particular resource. In the present invention, a user needs only to set the maximum stock factor and the invented system automatically calculates quantity of resource for which a purchase order should be made and the inventory management is thus conducted automatically.

These and other objectives and advantages of this invention may be clearly understood from the detailed description by referr9ing to the drawings:

BRIEF DESCRIPTION OF THE DRAWING

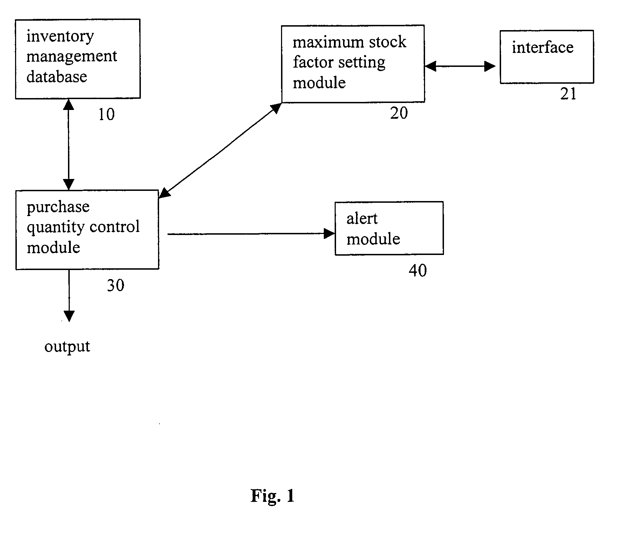

Fig. 1 illustrates the system diagram of the automatic inventory management system of this invention.

DETAILED DESCRIPTION OF THE INVENTION

A detailed description of the embodiment of the automatic inventory management system of this invention will be give below. Fig. 1 illustrates the system diagram of the automatic inventory management system of this invention. As shown in this figure, the automatic inventory management system comprises an inventory management database 10 to store inventory information useful in the inventory management and to include description, lead time, daily consumption quantity etc. of a plurality of resources; a maximum stock factor setting module 20 to allow user to set a maximum stock factor; a purchase quantity control module 30 to calculate and generate a suggested purchase quantity for particular resources based on factors as set in said maximum stock factor setting module 20 and data contained in said inventory management database 10; and an alert module 40 to generate an alert when the quantity in stock of a particular resource approaches to a predetermined value, to suggest the user to purchase the particular resource.

In the inventory management database 10, stored are data relating to resources in inventory, in particular data relating to inventory management. In the embodiment of this invention, data as stored in the inventory management database 10 may include information regarding any and all resources that are within the scope of management of the automatic inventory management system. Here, the term "resources" may denote to any and all finished products, in stock, in process, half product, material, parts, components, machine, space, personnel, time and any useful or valuable resources for an enterprise, which are subject to consumption from time to time. The term "information" or "data" on the other hand denotes to description, quantity currently in stock, lead time, daily consumption of a particular resource. Herein the term "lead time" denotes to time gap between the date when a purchase order is made to a supplier and the date when the ordered products are delivered, or between the date when an order to produce a product is made and the date when production of the ordered product is completed and the term "daily consumption" denotes to average daily consumption of a particular resource. In addition, data regarding quantity of deliverable, which denotes to quantity of a particular resource that is ordered by a customer or a user but is not delivered to the customer or user, and quantity of receivable, which denotes to quantity of a particular resource that is ordered but is not received, may also be included in the database 10. Of course, other data or information that is useful in the management of inventory may also be included in the inventory management database 10.

The "maximum stock factor" as used in this invention is one of the major features of this invention. Under the design of this invention, it is the most important task of an automatic inventory management to control the quantity of stock within a proper range. An automatic inventory management should be able to generate suggestions regarding inventory management, or even to automatically conduct management of stocking, according to the maximum stock factor as requested by the user.

According to one embodiment of this invention, the maximum stock factor may be a maximum period in which a resource may be stored in the inventory, i.e., a maximum time period set by person in charge of the inventory management, in which a product or a component may be kept as stock. The factor may apply to all resources or apply to a part of the resources. A plurality of maximum stock factors may be set and applied to different resources, respectively. The maximum stock factor setting module 20 provides a user interface 21, allowing user to input, revise or delete a maximum stock factor. The automatic inventory management system of this invention conducts the inventory management based on, among other things, the maximum stock factor. Besides the maximum stock period, any other factor or value that is useful for the inventory management system to calculate a maximum quantity of stock may also be used to control the quantity of inventory to be managed.

The purchase quantity control module 30 of this invention generates a suggested quantity of purchase for particular resources, so that manager of the inventory may take for reference when making a decision. In fact, persons in charge of inventory management don't determine to make a purchase order only when the quantity of a resource in stock approaches the "time to purchase", as defined above. A company may decide to put a purchase order for a variety of reason. For example, when a company puts a purchase order to its supplier for particular products, it may also purchase other products from the same supplier, in order to save expenses in putting another order at a separate time point or in order to gain a quantity discount. Under such a situation, the suggestions as generated by the automatic inventory management system of this invention will be useful to its user.

According to this invention, the purchase quantity control module 30 calculates, upon user's request, quantity of resource to be purchased according to the following formula:

$$\text{Quantity to purchase} = \text{maximum quantity of stock} - (\text{current stock quantity} - \text{lead time} * \text{daily consumption}) \text{ --------------- (2)}$$

In this formula,

$$\text{Maximum quantity of stock} = \text{maximum stock factor} * \text{daily consumption} \text{ ---- (3)}$$

In Formula (3), the "maximum stock factor" is a number set by the user to represent the up limit of days in which a particular resource may be stored as stock. In Formula (2), the "current stock quantity" represents current in-stock quantity of the particular resource, the "lead time" represents days counting from when a purchase order for the particular resource is made to its supplier to when the purchased resource is received or from when an order to produce the particular resource is made to when production of the resource is completed, and the "daily consumption" represents average daily consumption quantity of the particular resource, which may be a predetermined value or an average quantity for the past 30 days or the part year, as calculated by the automatic inventory management system.

With the above formula, purchase quantity of the particular resource as allowable under the maximum stock factor set by the user may be calculated and suggested. Accordingly, purchase quantity of particular resources will comply with the actual quantity of consumption of the particular resources and will not exceed the maximum quantity of stock as set by the user. Effective management of inventory that complies with the targets determined by the user may be achieved.

In other embodiments of this invention, the "quantity to purchase" may be obtained from the following formula:

$$\text{Quantity to purchase} = \text{maximum quantity of stock} - (\text{current stock quantity} - \text{lead time} * \text{daily consumption}) + \text{quantity deliverable} - \text{quantity receivable} ---- (4)$$

In Formula (4), "maximum quantity of stock", "current stock quantity", "lead time" and "daily consumption" have the same meaning as defined above, the "quantity deliverable" represents quantity of resource as sold but not delivered and the "quantity receivable" represents quantity of resource as purchased but not received.

The major difference between Formula (4) and Formula (2) is that factors of "quantity deliverable" and "quantity receivable" are taken into consideration in the calculation of "quantity to purchase", to make it more precise.

The purchase quantity control module 30 calculates and suggests quantity of particular resources to be purchased, according to targets of maximum stock factor set by the user.

In the present invention, the factor of "quantity to purchase" helps to control the quantity of inventory to under the maximum quantity of stock or the maximum stock factor. For an enterprise, if the de facto maximum quantity of stock or maximum stock factor is in a greater scale before it starts to use the automatic inventory management system of this invention, it can set the maximum stock factor of this invention to a smaller scale in the initial stage and lower the maximum stock factor gradually so that proper management of inventory may be achieved after a certain period of time.

In addition, the "daily consumption" may be a quantity obtained by the purchase quantity control module 30 automatically, as it can be calculated according to the average quantity of consumption of a particular resource in the past 30 days or in the past year. Such a quantity is a dynamic value and complies with the actual situation. The automatic inventory management system further provides an alert module 40 to generate an alert when stock of a particular resource approaches a predetermined value. Timing for generating such an alert may be determined according to the conventional art, when the "time to purchase" is determined, i.e., safety stock plus lead time times daily consumption. However, in some embodiments of this invention, the alert is generated when the "quantity to purchase" has reached or is over a threshold. As to the determination of the threshold, it is not limited to any theory. It may be determined by user according to factors such as safety stock, number of days of safety stock etc.

As described above, the automatic inventory management system of this invention is able to automatically generate suggestions for inventory management according to targets set by user and to control quantity of inventory to under a maximum stock quantity. An enterprise can lower the quantity of its inventory to an optimal level by using the invented automatic inventory management system to achieve effective inventory management.

As the present invention has been shown and described with reference to preferred embodiments thereof, those skilled in the art will recognize that the above and other changes may be made therein without departing form the spirit and scope of the invention.

**Claims**

1. An automatic inventory management system, comprising:

   an inventory management database to store useful inventory information of resources in store;
   a maximum stock factor setting module to allow user to set a maximum stock factor;
   a purchase quantity control module to calculate and generate a suggested purchase quantity for particular resources based on factors as set in said maximum stock factor setting module and data contained in said inventory management database; and
an alert module to generate an alert when the quantity in stock of a particular resource approaches to a predetermined value, to suggest the user to purchase the particular resource.

2. The automatic inventory management system according to claim 1, wherein data stored in said inventory management database comprise description, lead time, daily consumption quantity etc. of particular resources; wherein said "lead time" represents number of days counting from when a purchase order for the particular resource is made to its supplier to when the purchased resource is received or from when an order to produce the particular resource is made to when production of the resource is completed, and said "daily consumption" represents average daily consumption quantity of the particular resource.

3. The automatic inventory management system according to claim 1 or 2, wherein said purchase quantity control module calculates "quantity to purchase" of a particular resource according to the following formula:

$$\text{Quantity to purchase} = \text{maximum quantity of stock} - (\text{current stock quantity} - \text{lead time} * \text{daily consumption}) \text{ ---------------- (2)}$$

$$\text{wherein Maximum quantity of stock} = \text{maximum stock factor} * \text{daily consumption ---- (3)}$$

wherein "maximum stock factor" is a number set by the user, "current stock quantity" represents current in-stock quantity of the particular resource, "lead time" represents number of days counting from when a purchase order for the particular resource is made to its supplier to when the purchased resource is received or from when an order to produce the particular resource is made to when production of the resource is completed, and "daily consumption" represents average daily consumption quantity of the particular resource.

4. The automatic inventory management system according to claim 1 or 2, wherein said purchase quantity control module calculates "quantity to purchase" of a particular resource according to the following formula:

$$\text{Quantity to purchase} = \text{maximum quantity of stock} - (\text{current stock quantity} - \text{lead time} * \text{daily consumption}) + \text{quantity deliverable} - \text{quantity receivable ---- (4)}$$

$$\text{wherein Maximum quantity of stock} = \text{maximum stock factor} * \text{daily consumption ---- (3)}$$

wherein "maximum stock factor" is a number set by the user, "current stock quantity" represents current in-stock quantity of the particular resource, "lead time" represents number of days counting from when a purchase order for the particular resource is made to its supplier to when the purchased resource is received or from when an order to produce the particular resource is made to when production of the resource is completed, "daily consumption" represents average daily consumption quantity of the particular resource, "quantity deliverable" represents quantity of resource as sold but not delivered and "quantity receivable" represents quantity of resource as purchased but not received.

5. The automatic inventory management system according to claim 2, wherein said "daily consumption" is a value calculated using data stored in said inventory management database.

6. The automatic inventory management system according to claim 3, wherein said "daily consumption" is a value calculated using data stored in said inventory management database.

7. The automatic inventory management system according to claim 4, wherein said "daily consumption" is a value calculated using data stored in said inventory management database.

8. The automatic inventory management system according to claim 1 or 2, wherein said "maximum stock factor" is maximum number of days in which a particular resource may be store at stock.

9. The automatic inventory management system according to claim 3, wherein said "maximum stock factor" is maximum number of days in which a particular resource may be stored as stock.

10. The automatic inventory management system according to claim 4, wherein said "maximum stock factor" is maximum number of days in which a particular resource may be stored as stock.

**Amended claims in accordance with Rule 86(2) EPC.**

1. An automatic inventory management system to generate information of suggested quantity of particular resources to be purchased by user, comprising in a computer system the following elements:

an inventory management database in memory device of said computer system to store useful inventory information of resources in store;
a maximum stock factor setting module to accept and to store user's input of a maximum stock factor relating to a particular resource;
a purchase quantity control module to calculate and to generate a suggested purchase quantity for said particular resource based on said user input maximum stock factor as accepted by and stored in said maximum stock factor setting module and data contained in said inventory management database relating to said particular resource; and
an alert module to generate an alert when the quantity in stock of said particular resource approaches to a predetermined value, to suggest the user to purchase the particular resource;
**characterized in that** said purchase quantity control module calculates said suggested purchase quantity according to a maximum allowable quantity of stock for said particular resource, as calculated according to said maximum stock factor as follows:

```
Maximum allowable quantity of stock = maximum stock
factor * daily consumption quantity of said particular
resource;
```

wherein said "maximum stock factor" comprises a number of days and said "daily consumption quantity" represents average daily consumption quantity of said particular resource, as stored in said inventory management database.

2. The automatic inventory management system according to claim 1, wherein data stored in said inventory management database comprise description, lead time, daily consumption quantity of particular resources;
wherein said "lead time" represents number of day counting from when a purchase order for a particular resource is made to its supplier to when said purchased resource is received or from when an order to produce a particular resource is made to when production of said resource is completed.

3. The automatic inventory management system according to claim 1 or 2, wherein said purchase quantity control module calculates "quantity to purchase" of said particular resource according to the following formula:

```
Quantity to purchase = maximum allowable quantity of
stock - (current stock quantity - lead time * daily
consumption quantity),
```

wherein "current stock quantity" represents current in-stock quantity of said particular resource and said "lead time" represents number of days counting from when a purchase order for said particular resource is made to its supplier to when said purchased resource is received or from when an order to produce said particular resource is made to when production of said resource is completed.

4. The automatic inventory management system according to claim 1 or 2, wherein said purchase quantity control module calculates "quantity to purchase" of a particular resource according to the following formula:

```
Quantity to purchase = maximum allowable quantity of
stock - (current stock quantity - lead time * daily
consumption quantity) + quantity deliverable - quantity
receivable,
```

wherein "current stock quantity" represents current in-stock quantity of said particular resource, "lead time" represents number of days counting from when a purchase order for said particular resource is made to its supplier to when said purchased resource is received or from when an order to produce said particular resource is made to when production of said resource is completed, "quantity deliverable" represents quantity of resource as sold but not delivered and "quantity receivable" represents quantity of resource as purchased but not received.

5. The automatic inventory management system according to claim 1, wherein said "daily consumption" is a value calculated using other data stored in said inventory management database.

inventory
management
database
10

maximum stock
factor setting
module
20

interface
21

purchase
quantity control
module
30

alert
module
40

output

**Fig. 1**

European Patent
Office

**DECLARATION**

which under Rule 45 of the European Patent Convention
shall be considered, for the purposes of subsequent
proceedings, as the European search report

**Application Number**

EP 05 01 0270

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| | G06F17/60 |

Reason:

The claims relate to subject matter
excluded from patentability under Art.
52(2) and (3) EPC. Given that the claims
are formulated in terms of such subject
matter or merely specify commonplace
features relating to its technological
implementation, the search examiner could
not establish any technical problem which
might potentially have required an
inventive step to overcome. Hence it was
not possible to carry out a meaningful
search into the state of the art (Rule 45
EPC). See also Guidelines Part B Chapter
VIII, 1 and 3.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).

-----

| Place of search | Date | Examiner |
|---|---|---|
| Munich | 6 September 2005 | Aupiais, B |

EPO FORM 1504 (P04C37)